(19) **Europäisches Patentamt / European Patent Office / Office européen des brevets**

(11) **EP 3 905 389 A1**

(12) **EUROPEAN PATENT APPLICATION**
published in accordance with Art. 153(4) EPC

(43) Date of publication:
**03.11.2021 Bulletin 2021/44**

(21) Application number: **19902330.0**

(22) Date of filing: **25.12.2019**

(51) Int Cl.:
*H01M 4/133* (2010.01)     *H01M 4/587* (2010.01)
*H01G 11/24* (2013.01)     *H01G 11/32* (2013.01)
*H01G 11/44* (2013.01)     *C01B 32/00* (2017.01)

(86) International application number:
**PCT/JP2019/051006**

(87) International publication number:
**WO 2020/138233 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.12.2018   JP 2018248063**

(71) Applicant: **Kuraray Co., Ltd.**
**Kurashiki-shi, Okayama 710-0801 (JP)**

(72) Inventors:
• **ARIMA, Junichi**
  **Bizen-shi, Okayama 705-0025 (JP)**
• **HIROTA, Yasuyuki**
  **Bizen-shi, Okayama 705-0025 (JP)**
• **YAMABATA, Akinori**
  **Bizen-shi, Okayama 705-0025 (JP)**
• **OKUNO, Taketoshi**
  **Bizen-shi, Okayama 705-0025 (JP)**

(74) Representative: **Müller-Boré & Partner**
**Patentanwälte PartG mbB**
**Friedenheimer Brücke 21**
**80639 München (DE)**

(54) **CARBONACEOUS MATERIAL FOR ELECTROCHEMICAL DEVICE, ANODE FOR ELECTROCHEMICAL DEVICE, AND ELECTROCHEMICAL DEVICE**

(57)     The present invention relates to a carbonaceous material for an electrochemical device, having an average particle size $D_{50}$ of 30 μm or larger as measured by a laser scattering method, and a basic flowability energy BFE of 270 mJ to 1,100 mJ as measured using a powder flowability analyzer equipped with a measuring vessel of 50 mm in diameter and 160 mL in volume under the conditions of a blade tip speed of 100 mm/sec and a powder sample filling capacity of 120 mL and calculated by the following formula: $BFE = T/(R\tan\alpha) + F$ (wherein, R = 48 mm, $\alpha = 5°$, T represents a numerical value of the rotational torque measured by the analyzer, and F represents a numerical value of the normal stress measured by the analyzer).

EP 3 905 389 A1

**Description**

TECHNICAL FIELD

The present invention relates to: a carbonaceous material for an electrochemical device; a negative electrode for an electrochemical device; and an electrochemical device.

BACKGROUND ART

Electrochemical devices include secondary batteries and capacitors that utilize an electrochemical phenomenon. For example, lithium ion secondary batteries, which are one type of electrochemical device, are widely used in small portable devices such as cellular phones and laptop computers. As negative electrode materials of such lithium ion secondary batteries, non-graphitizable carbons that can be doped (charged) and dedoped (discharged) with a large amount of lithium in excess of the theoretical capacity of graphite, which is 372 mAh/g, have been developed (e.g., Patent Document 1) and used.

A non-graphitizable carbon can be obtained by using, for example, a petroleum pitch, a coal pitch, a phenolic resin, or a plant as a carbon source. Among these carbon sources, plants are raw materials that can be sustainably and stably supplied through cultivation, and have been attracting attention since they can be obtained inexpensively. Further, carbonaceous materials obtained by calcining plant-derived carbon raw materials have a large number of pores and are thus expected to have good charge-discharge capacities (e.g., Patent Documents 1 and 2).

In cases where a non-graphitizable carbon is used as, for example, a negative electrode material of a lithium ion secondary battery, the non-graphitizable carbon usually has an average particle size $D_{50}$ of about 15 $\mu$m or smaller such that the negative electrode density can be easily increased. (e.g., Patent Document 3).

PRIOR ART DOCUMENTS

PATENT DOCUMENTS

[Patent Document 1] Japanese Laid-Open Patent Publication No. H9-161801
[Patent Document 2] Japanese Laid-Open Patent Publication No. H10-21919
[Patent Document 3] Japanese Unexamined Patent Application Publication (Translation of PCT Application) No. 2012-533864

SUMMARY OF THE INVENTION

PROBLEMS TO BE SOLVED BY THE INVENTION

In various applications of an electrochemical device in which a carbonaceous material, particularly a non-graphitizable carbon is used as a negative electrode material, it is demanded to increase the energy density of negative electrode in the device. As means for increasing the energy density, it is considered to increase the negative electrode ratio inside the device by increasing the volume of negative electrode layer.

However, it was found that, when the volumetric capacity during charging and discharging (hereinafter, also simply referred to as "volumetric capacity") of a negative electrode layer that contains a normally-used carbonaceous material having a small average particle size (e.g., Patent Document 3) is increased for the purpose of increasing the negative electrode ratio, the resistance is also increased, as a result of which the discharge capacity retention rate in high-rate discharging is reduced. Meanwhile, it was also found that a simple increase in the average particle size of a carbonaceous material contained in a negative electrode material of a device leads to a reduction in the negative electrode density, as a result of which a good volumetric capacity cannot be obtained.

An object of the present invention is to provide a carbonaceous material used in an electrochemical device (e.g., a lithium ion secondary battery that is a nonaqueous electrolyte secondary battery), which carbonaceous material exhibits a good volumetric capacity and has an excellent discharge capacity retention rate when applied as a negative electrode layer. Another object of the present invention is to provide: a negative electrode for an electrochemical device, which comprises the carbonaceous material; and an electrochemical device which comprises the negative electrode for an electrochemical device.

MEANS FOR SOLVING PROBLEMS

The present inventors intensively studied to discover that, with regard to a carbonaceous material-containing negative electrode for an electrochemical device, even when a negative electrode layer is formed with incorporation of a carbonaceous material having a larger-than-normal average particle size, the negative electrode layer can be favorably formed as long as the basic flowability energy BFE of the carbonaceous material, which is measured by a powder flowability analysis, is in a prescribed range under specific conditions; and that an electrochemical device comprising this negative electrode layer exhibits a good volumetric capacity and has an excellent discharge capacity retention rate.

That is, the present invention encompasses the following preferred modes.

[1] A carbonaceous material for an electrochemical device, having an average particle size $D_{50}$ of 30 $\mu$m or larger as measured by a laser scattering method, and a basic flowability energy BFE of 270 mJ to 1,100 mJ as measured using a powder flowability analyzer equipped with a measuring vessel of 50 mm in diameter and 160 mL in volume under the conditions of a blade tip speed of 100 mm/sec and a powder sample filling capacity of 120 mL and calculated by the following formula: BFE = $T/(Rtan\alpha)$ + F (wherein, R = 48 mm, $\alpha$ = 5°, T represents a numerical value of the rotational torque measured by the analyzer, and F represents a numerical value of the normal stress measured by the analyzer).

[2] The carbonaceous material according to [1], wherein, when the carbonaceous material is doped with lithium to a fully-charged state and analyzed by $^7$Li solid-state NMR, a main resonance peak shifted by not less than 115 ppm toward a lower magnetic field side with respect to a resonance peak of LiCl used as a standard substance is observed.

[3] The carbonaceous material according to [1] or [2], wherein the average interplanar spacing $d_{002}$ of the (002) plane, which is calculated using the Bragg equation in accordance with a wide-angle X-ray diffraction method, is 0.36 nm or larger.

[4] The carbonaceous material according to any one of [1] to [3], which is derived from a plant.

[5] A negative electrode for an electrochemical device, comprising the carbonaceous material according to any one of [1] to [4].

[6] The negative electrode for an electrochemical device according [5], having a negative electrode layer thickness of 100 $\mu$m or greater.

[7] An electrochemical device, comprising the negative electrode for an electrochemical device according to [5] or [6] .

EFFECTS OF THE INVENTION

An electrochemical device, in which the carbonaceous material for an electrochemical device according to the present invention is used as a negative electrode material, exhibits a good volumetric capacity and has an excellent discharge capacity retention rate.

MODE FOR CARRYING OUT THE INVENTION

Embodiments of the present invention will now be described in detail. It is noted here, however, that the present invention is not restricted to the below-described embodiments.

The term "electrochemical device" used herein generally refers to a device which can comprise a carbonaceous material-containing negative electrode and utilizes an electrochemical phenomenon. Specific examples of an electrochemical device include secondary batteries, such as lithium ion secondary batteries, nickel-hydrogen secondary batteries and nickel-cadmium secondary batteries, and capacitors such as electric double-layer capacitors, which can be used repeatedly by charging. Thereamong, the electrochemical device may be particularly a nonaqueous electrolyte secondary battery (e.g., a lithium ion secondary battery, a sodium ion battery, a lithium-sulfur battery, a lithium-air battery, an all-solid-state battery, or an organic radical battery), more particularly a lithium ion secondary battery.

(Carbonaceous Material For Electrochemical Device)

The carbonaceous material for an electrochemical device according to one embodiment of the present invention has an average particle size $D_{50}$ of 30 $\mu$m or larger as measured by a laser scattering method, and a basic flowability energy BFE of 270 mJ to 1,100 mJ as measured using a powder flowability analyzer equipped with a measuring vessel of 50 mm in diameter and 160 mL in volume under the conditions of a blade tip speed of 100 mm/sec and a powder sample filling capacity of 120 mL and calculated by the following formula: BFE = $T/(Rtan\alpha)$ + F (wherein, R = 48 mm, $\alpha$ = 5°, T represents a numerical value of the rotational torque measured by the analyzer, and F represents a numerical value of the normal stress measured by the analyzer) (hereinafter, also expressed as "(having) a basic flowability energy BFE in a prescribed range under specific conditions").

The average particle size $D_{50}$ of the carbonaceous material of the present embodiment, which is measured by a laser scattering method, is 30 μm or larger, preferably 38 μm or larger, more preferably 40 μm or larger, still more preferably 45 μm or larger, yet still more preferably 50 μm or larger.

The average particle size $D_{50}$ is a particle size at a cumulative volume of 50%. In the present specification, the average particle size $D_{50}$ is measured by a laser scattering method using a particle size distribution analyzer. Not only the average particle size $D_{50}$ of the carbonaceous material of the present embodiment, but also the average particle size $D_{50}$ in the state of the below-described plant-derived char, as well as the average particle size $D_{50}$ in the state of a plant-derived char carbon precursor before the calcining step performed as required but after the pulverization step and/or the classification step, can be measured by the same method.

By controlling the carbonaceous material of the present embodiment to have an average particle size $D_{50}$ of 30 μm or larger, when this carbonaceous material is applied to a negative electrode layer of an electrochemical device, the volume of the negative electrode layer can be easily increased, so that the negative electrode ratio inside the electrochemical device can be efficiently increased. An upper limit of the average particle size $D_{50}$ is not particularly restricted, and it may be usually 500 μm or smaller, preferably 400 μm or smaller, more preferably 300 μm or smaller, still more preferably 200 μm or smaller, yet still more preferably 100 μm or smaller, particularly preferably 80 μm or smaller. This is because, when the average particle size $D_{50}$ is not larger than the upper limit value, the below-described basic flowability energy BFE measured by a powder flowability analysis can be easily adjusted to be in a prescribed range under specific conditions, consequently making it easy to increase the electrode density.

The basic flowability energy BFE of the carbonaceous material of the present embodiment, which is measured using a powder flowability analyzer equipped with a measuring vessel of 50 mm in diameter and 160 mL in volume under the conditions of a blade tip speed of 100 mm/sec and a powder sample filling capacity of 120 mL and calculated by the following formula: $BFE = T/(R\tan\alpha) + F$ (wherein, R = 48 mm, α = 5°, T represents a numerical value of the rotational torque measured by the analyzer, and F represents a numerical value of the normal stress measured by the analyzer), is 270 mJ to 1,100 mJ, preferably 270 mJ to 1,000 mJ, more preferably 280 mJ to 800 mJ, still more preferably 290 mJ to 800 mJ, yet still more preferably 290 mJ to 600 mJ.

The basic flowability energy BFE is a value of the transfer energy (J) of a blade corresponding to the blade height, which value is measured by a powder flowability analyzer and required for moving the blade arranged in the analyzer against a sample powder loaded to the analyzer. The basic flowability energy BFE can be measured using a powder rheometer FT4 manufactured by Freeman Technology Ltd.

In the measurement using a powder rheometer FT4 manufactured by Freeman Technology Ltd., for example, a blade is put into a powder-filled vessel while being rotated at a constant blade tip speed, and the normal stress F and the rotational torque T are measured using a load cell on the bottom of the rheometer and an upper torque meter, respectively. In this process, the energy required for moving the blade in the powder is calculated from the normal stress F, the rotational torque T and the blade height. Defining the blade radius (also referred to as "blade diameter") as "R" and the helix angle at which the blade tip moves as "α°", the transfer energy of the blade corresponding to the blade height, i.e. basic flowability energy BFE, can be determined by $BFE = T/(R\tan\alpha) + F$. It is noted here that the powder rheometer FT4 manufactured by Freeman Technology Ltd. has the following values: α = 5°, R = 48 mm, diameter of the vessel filled with powder = 50 mm, vessel volume = 160 mm (see "Consideration between Evaluation of Powder Rheology and Flowability", Yukiyoshi Hiramura, Journal of the Society of Powder Technology Japan, 2017, Vol. 54, No. 9, p.604-608). The basic flowability energy BFE can be determined by, for example, loading 120 mL of a powder to this apparatus and putting the blade into the powder while rotating the blade at a blade tip speed of 100 mm/sec.

Generally speaking, the basic flowability energy BFE of a powder of a carbonaceous material can be small when the particles of the powder are light and have a small average particle size $D_{50}$, while the basic flowability energy BFE can be large when the powder has a large average particle size $D_{50}$. However, it is presumed that the basic flowability energy BFE is associated not only with the average particle size $D_{50}$ of the powder of the carbonaceous material, but also with a variety of physical properties, such as the amount of fine powder contained in the powder, the particle size distribution, the physical properties of the powder particle surface, and the amount of surface functional groups. With regard to the amount of fine powder as one example of the above-described physical properties, it is presumed as follows. Even if the powder of the carbonaceous material has a large average particle size $D_{50}$ of, for example, 30 μm or larger as in the present embodiment, the basic flowability energy BFE does not become excessively large when, for example, the amount of fine powder is appropriate. In the case of forming an electrode from such a powder of the carbonaceous material, the density of the resulting electrode is always sufficient. On the other hand, when the powder of the carbonaceous material similarly has a large average particle size $D_{50}$ of 30 μm or larger but, for example, the amount of fine powder is excessively small, the basic flowability energy BFE can be extremely large. In the case of forming an electrode from such a powder of the carbonaceous material, the density of the resulting electrode can be insufficient. Further, when the powder of the carbonaceous material similarly has a small average particle size $D_{50}$ of, for example, smaller than 30 μm, the basic flowability energy BFE is small. It was found that, in case of forming an electrode from such a powder of the carbonaceous material, an electrode layer which can be preferably used cannot be obtained appropriately. More specifically, it was found that, in the formation of an electrode layer having a large volume, particularly an electrode layer having a large thickness, the resulting electrode has molding defects when a binder is added in a small amount, while a favorable electrode density cannot be attained when the amount of the binder is increased to improve the molding defects, and this consequently reduces the volumetric capacity.

That is, in the carbonaceous material of the present embodiment, a variety of properties such as the amount of fine powder in the powder of the carbonaceous material, the particle size distribution, the physical properties of the powder particle surface, and the amount of surface functional groups are adjusted, whereby the average particle size $D_{50}$, which is measured by a laser scattering method, is controlled to be 30 $\mu$m or larger and the basic flowability energy BFE, which is measured using a powder flowability analyzer equipped with a measuring vessel of 50 mm in diameter and 160 mL in volume under the conditions of a blade tip speed of 100 mm/sec and a powder sample filling capacity of 120 mL and calculated by the following formula: BFE = T/(Rtan$\alpha$) + F (wherein, R = 48 mm, $\alpha$ = 5°, T represents a numerical value of the rotational torque measured by the analyzer, and F represents a numerical value of the normal stress measured by the analyzer), is controlled to be 270 mJ to 1,100 mJ. By using such a carbonaceous material as a negative electrode material for an electrochemical device, a good charge-discharge volumetric capacity and an excellent discharge capacity retention rate can be attained. This effect is exerted more prominently when the volume of the negative electrode layer, particularly the thickness of the negative electrode layer, is large.

For example, a method of adjusting the amount of fine powder contained in the powder of the carbonaceous material is not particularly restricted, and the amount of fine powder can be adjusted in the pulverization step and/or the classification step, particularly the classification step, in the below-described production process of the carbonaceous material.

In the carbonaceous material, when the carbonaceous material is doped with lithium to a fully-charged state and analyzed by $^7$Li solid-state NMR, a main resonance peak shifted by preferably not less than 115 ppm, more preferably 115 ppm to 145 ppm, toward a lower magnetic field side with respect to a resonance peak of LiCl used as a standard substance is observed. Such a carbonaceous material functions in a preferred manner when applied to a lithium ion secondary battery that is an electrochemical device. Specifically, a main resonance peak with a large shift value toward the lower magnetic field side indicates that a large amount of lithium exists in clusters. In the carbonaceous material of the present embodiment, from the standpoint of achieving quick dissociation of the clusters and thus rapid charging and discharging, the shift value toward the lower magnetic field side is more preferably 142 ppm or less, still more preferably 138 ppm or less. A main resonance peak with a small shift value toward the lower magnetic field side indicates that a large amount of lithium exists between carbon layers. From the standpoint of improving the charge-discharge volumetric capacity, the shift value toward the lower magnetic field side is more preferably not less than 120 ppm.

The expression "a main resonance peak is observed" used herein means that a lithium species giving the main resonance peak exists in an amount of not less than 3%, which is the detection limit of the below-described $^7$Li solid-state NMR spectroscopy.

Further, the expression "doped with lithium to a fully-charged state" used herein means that a nonaqueous electrolyte secondary battery is assembled using an electrode containing the carbonaceous material and an electrode containing metal lithium as a positive electrode and a negative electrode, respectively, and this secondary battery is charged to a final voltage of usually 0.1 to 0 mV, preferably 0.05 to 0 mV, more preferably 0.01 to 0 mV.

Particularly, a $^7$Li solid-state NMR spectrum can be measured using a nuclear magnetic resonance apparatus in the same manner as in the below-described Examples.

A method of adjusting the chemical shift value of the main resonance peak toward the lower magnetic field side to be in the above-described range is not particularly restricted and, for example, a method of heat-treating a plant-derived char, a carbon precursor, or a mixture of a carbon precursor and a volatile organic substance at a temperature of 800°C to 1,400°C while supplying a halogen compound-containing inert gas or a halogen compound-free inert gas in an amount of not less than 14 L/min per 50 g of the above-described material can be employed. It is noted here that the heat treatment of the mixture of a carbon precursor and a volatile organic substance is preferably performed in a halogen compound-free inert gas.

In the carbonaceous material, the average interplanar spacing $d_{002}$ of the (002) plane, which is calculated using the Bragg equation in accordance with a wide-angle X-ray diffraction method, can be preferably 0.36 nm or larger, more preferably 0.36 nm to 0.42 nm, still more preferably 0.38 nm to 0.4 nm, yet still more preferably 0.382 nm to 0.396 nm. When the average interplanar spacing $d_{002}$ of the (002) plane is excessively small, the resistance for insertion of ions utilized by an electrochemical device (e.g., lithium ions) into the carbonaceous material as well as the resistance during output may be increased, as a result of which the input-output characteristics of the electrochemical device may be deteriorated. In addition, since the carbonaceous material repeatedly expands and shrinks, its stability as an electrode material may be impaired. When the average interplanar spacing $d_{002}$ is excessively large, the diffusion resistance of the ions is small; however, the effective capacity per volume may be reduced due to an increase in the volume of the carbonaceous material.

A method of adjusting the average interplanar spacing to be in the above-described range is not restricted at all and, for example, when the below-described calcining is performed on a carbon precursor giving the carbonaceous material, the calcining may be carried out in a temperature range of 800°C to 1,400°C. A method of calcining the carbon precursor after mixing it with a thermally-decomposable resin such as a polystyrene may be employed as well.

The specific surface area of the carbonaceous material is preferably 1 $m^2$/g to 100 $m^2$/g, more preferably 3 $m^2$/g to 50 $m^2$/g, still more preferably 3 $m^2$/g to 30 $m^2$/g, yet still more preferably 5 $m^2$/g to 25$m^2$/g, for example, 5 $m^2$/g to 20 $m^2$/g. When the specific surface area is excessively small, the amount of ions utilized by an electrochemical device (e.g., lithium ions) that adsorb to the carbonaceous material is reduced, and this may lead to a decrease in the charge capacity of a nonaqueous electrolyte secondary battery. When the specific surface area is excessively large, since such ions are consumed by reaction on the surface of the carbonaceous material, the utilization efficiency of the ions is reduced.

In the present specification, the specific surface area (BET specific surface area) of the carbonaceous material and that of the below-described carbon precursor are determined by a BET method (nitrogen adsorption BET three-point method). An approximation formula derived from the BET equation is shown below.

$$p/[v(p_0-p)]=(1/v_m c)+[(c-1)/v_m c](p/p_0)$$

Using the above approximation formula, $v_m$ is determined by a three-point method based on nitrogen adsorption at liquid nitrogen temperature, and the specific surface area of a sample is calculated by the following formula:

$$\text{specific surface area}=\left(\frac{v_m Na}{22400}\right)\times 10^{-18}$$

In this case, $v_m$ represents an adsorption amount ($cm^3$/g) required for the formation of a monolayer on the sample surface; v represents an adsorption amount ($cm^3$/g) that is actually measured; $p_0$ represents a saturated vapor pressure; p represents an absolute pressure; c is a constant (reflecting the adsorption heat); N is Avogadro's number ($6.022 \times 10^{23}$); and a ($nm^2$) represents the area occupied by adsorbate molecules on the sample surface (molecular-occupied cross-sectional area).

More specifically, the amount of nitrogen adsorbed to the sample at liquid nitrogen temperature can be determined as follows using, for example, "BELSORP Mini" manufactured by MicrotracBEL Corp. The sample is filled into a sample tube, and this sample tube is once depressurized in a state of being cooled to -196°C, after which nitrogen (purity: 99.999%) is allowed to adsorb to the sample at a desired relative pressure. The amount of nitrogen adsorbed to the sample at the time when an equilibrium pressure is achieved at the desired relative pressure is defined as an adsorbed gas amount v.

Other method of adjusting the specific surface area to be in the above-described range is not restricted at all and, for example, a method of adjusting the temperature and time of the calcining of a carbon precursor performed as required may be employed in the production of the carbonaceous material. In other words, since an increase in the calcining temperature or the calcining time tends to result in a smaller specific surface area, the calcining temperature and the calcining time may be adjusted in such a manner that the specific surface area is obtained in the above-described range. A method of calcining the carbon precursor after mixing it with a volatile organic substance may be employed as well. As described below, it is believed that, by calcining the carbon precursor after mixing it with a volatile organic substance, a carbonaceous coating film obtained by a heat treatment of the volatile organic substance is formed on the surface of the carbon precursor. It is also believed that this carbonaceous coating film reduces the specific surface area of the carbonaceous material obtained from the carbon precursor. Accordingly, the specific surface area of the carbonaceous material can be adjusted to be in the above-described range by adjusting the amount of the volatile organic substance to be mixed.

The lower the elemental nitrogen content in the carbonaceous material, the more preferred it is. Usually, in terms of analysis value obtained by an elemental analysis, the elemental nitrogen content is 1.0% by mass or less, preferably 0.8% by mass or less, more preferably 0.7% by mass or less, still more preferably 0.5% by mass or less, particularly preferably 0.4% by mass or less, especially preferably 0.3% by mass or less, extremely preferably 0.25% by mass or less, most preferably 0.2% by mass or less, for example, 0.15% by mass or less. It is further preferred that the carbonaceous material contain substantially no elemental nitrogen. The expression "contain substantially no elemental nitrogen" used herein means that the elemental nitrogen content is not higher than $10^{-6}$% by mass, which is the detection limit of the below-described elemental analysis (inert gas fusion-thermal conductivity method). When the elemental nitrogen content is excessively high, not only the ions to be utilized by an electrochemical device are consumed through reaction with nitrogen to cause a reduction in the utilization efficiency of the ions, but also nitrogen may react with oxygen in the air during storage.

A method of adjusting the elemental nitrogen content to be in the above-described range is not restricted at all and, for example, in the below-described production method, a plant-derived char may be demineralized in a gas phase by a method comprising the step of performing a heat treatment at 500°C to 940°C in a halogen compound-containing inert gas atmosphere, or a carbon precursor may be mixed with a volatile organic substance and then calcined as required, whereby the elemental nitrogen content can be adjusted to be in the above-described range.

The lower the elemental oxygen content in the carbonaceous material, the more preferred it is. Usually, in terms of analysis value obtained by an elemental analysis, the elemental oxygen content is 0.8% by mass or less, preferably 0.5% by mass or less, more preferably 0.3% by mass or less. It is still more preferred that the carbonaceous material contain substantially no elemental oxygen. The expression "contain substantially no elemental oxygen" used herein means that the elemental oxygen content is not higher than $10^{-6}$% by mass, which is the detection limit of the below-described elemental analysis (inert gas fusion-thermal conductivity method). When the elemental oxygen content is excessively high, since the ions to be utilized by an electrochemical device (e.g., lithium ions) are consumed through reaction with oxygen, the utilization efficiency of the ions may be reduced. In addition, an excessively high elemental oxygen content not only attracts oxygen and moisture in the air to increase the probability of their reaction with the carbonaceous material, but also reduces the utilization efficiency of the ions by, for example, preventing easy desorption of adsorbed water in some cases.

A method of adjusting the elemental oxygen content to be in the above-described range is not restricted at all and, for example, in the below-described production method, a plant-derived char may be demineralized in a gas phase by a method comprising the step of performing a heat treatment at 500°C to 940°C in a halogen compound-containing inert gas atmosphere, or a carbon precursor may be mixed with a volatile organic substance and then calcined as required, whereby the elemental oxygen content can be adjusted to be in the above-described range.

The elemental nitrogen content and the elemental oxygen content can be measured by performing an elemental analysis using a commercially available oxygen/nitrogen analyzer.

From the standpoint of increasing the dedoping capacity as well as the standpoint of reducing the non-dedoping capacity, the elemental potassium content in the carbonaceous material is preferably 0.1% by mass or less, more preferably 0.05% by mass or less, still more preferably 0.03% by mass or less, particularly preferably 0.01% by mass or less, especially preferably 0.005% by mass. From the standpoint of increasing the dedoping capacity as well as the standpoint of reducing the non-dedoping capacity, the elemental iron content in the carbonaceous material is preferably 0.02% by mass or less, more preferably 0.015% by mass or less, still more preferably 0.01% by mass or less, particularly preferably 0.006% by mass or less, especially preferably 0.004% by mass or less. When the elemental potassium content and/or the elemental iron content in the carbonaceous material are not higher than the above-described respective upper limit values, the dedoping capacity tends to be increased while the non-dedoping capacity tends to be reduced in a nonaqueous electrolyte secondary battery using the carbonaceous material. In addition, when the elemental potassium content and/or the elemental iron content in the carbonaceous material are not higher than the above-described respective upper limit values, the occurrence of a short circuit caused by reprecipitation of these metal elements eluted into an electrolyte solution is inhibited, so that the safety of the nonaqueous electrolyte secondary battery can be ensured. It is particularly preferred that the carbonaceous material contain substantially neither elemental potassium nor elemental ion. The details of the measurement of the elemental potassium content and the elemental iron content are as described below in the section of Examples, and a fluorescent X-ray analyzer can be used. The elemental potassium content and the elemental iron content in the carbonaceous material are usually 0% by mass or higher. The elemental potassium content and the elemental iron content in the carbonaceous material tend to be reduced as the elemental potassium content and the elemental iron content in the carbon precursor decrease.

In the carbonaceous material, from the standpoint of increasing the capacity per mass of an electrochemical device, the true density $\rho_{Bt}$ measured by a butanol method is preferably 1.4 g/cm$^3$ to 1.7 g/cm$^3$, more preferably 1.42 g/cm$^3$ to 1.65 g/cm$^3$, still more preferably 1.44 g/cm$^3$ to 1.6 g/cm$^3$. The carbonaceous material having such a true density $\rho_{Bt}$ d can be produced by, for example, calcining a plant raw material at 800°C to 1,400°C. The details of the measurement of the true density $\rho_{Bt}$ are as described below in the section of Examples. In other words, the true density $\rho_{Bt}$ can be measured by a butanol method according to the method prescribed in JIS R7212.

The moisture absorption amount of the carbonaceous material is preferably 40,000 ppm or less, more preferably 20,000 ppm or less, still more preferably 10,000 ppm or less. A smaller moisture absorption amount is more preferred since it leads to a reduction in the amount of moisture adsorbing to the carbonaceous material and an increase in the amount of ions to be utilized by an electrochemical device (e.g., lithium ions) that adsorb to the carbonaceous material. A smaller moisture absorption amount is also preferred since it can lead to a reduction in the self-discharging caused by the reaction between the adsorbed moisture and the nitrogen atoms of the carbonaceous material and the reaction between the adsorbed moisture and the ions. The moisture absorption amount of the carbonaceous material can be reduced by, for example, reducing the amount of nitrogen atoms and oxygen atoms that are contained in the carbonaceous material.

In the present specification, the moisture absorption amount of the carbonaceous material can be determined by Karl Fischer method.

One example of a method of producing the carbonaceous material will now be described in detail.

The carbonaceous material is obtained by, for example, calcining as required a carbon precursor or a mixture of a carbon precursor and a volatile organic substance in an inert gas atmosphere at 800°C to 1,400°C. When the carbonaceous material is obtained in this manner, the carbonaceous material can be sufficiently carbonized and provided as a carbonaceous material having pores suitable for an electrode material.

The carbon precursor is a precursor of the carbonaceous material that supplies a carbon component in the production of the carbonaceous material, and can be produced using a plant-derived carbon material (hereinafter, also referred to as "plant-derived char") as a raw material. The term "char" generally refers to a carbon-rich powder-form solid that is not melted or softened and is obtained when coal is heated; however, the term "char" hereinafter also refers to a carbon-rich powder-form solid that is not melted or softened and is obtained by heating an organic material. A carbon precursor derived from a plant is environmentally and economically advantageous from the standpoints of carbon neutral and availability.

A plant used as a raw material of the plant-derived char (hereinafter, also referred to as "plant raw material") is not particularly restricted. Examples thereof include coconut shells, coffee beans, tea leaves, sugarcane, fruits (e.g., mandarin oranges and bananas), straws, husks, broad-leaved trees, coniferous trees, and bamboos. These exemplified materials also include wastes generated after the use of the respective materials for their original purposes (e.g., used tea leaves), and portions of plant raw materials (e.g., banana peels and mandarin orange peels). These plants may be used singly, or in combination of two or more kinds thereof. Among these plants, coconut shells are preferred since they are readily available in a large amount and industrially advantageous.

The coconut shells are not particularly restricted, and examples thereof include coconut shells of palm trees (oil palm), coconut palm, Salak, and double coconut. These coconut shells may be used singly, or in combination of two or more kinds thereof. Coconut shells of coconut palm and oil palm, which are biomass wastes generated in large amounts when coconut palm and oil palm are used as food, detergent raw materials, biodiesel oil raw materials and the like, are particularly preferred.

A method of producing a char from a plant raw material is not particularly restricted, and a char can be produced by, for example, heat-treating (hereinafter, also referred to as "pre-calcining") the plant raw material in an inert gas atmosphere at 300°C or higher.

Alternatively, the plant raw material can be obtained in the form of char (e.g., coconut shell char).

The carbonaceous material produced from a plant-derived char can be doped with a large amount of an active material and is, therefore, suitable as a negative electrode material of an electrochemical device. However, a char derived from a plant contains a large amount of metal elements contained in the plant. For example, a coconut shell char may contain about 0.3% by mass of elemental potassium and about 0.1 % by mass of elemental iron. The use of the carbonaceous material containing a large amount of these metal elements as a negative electrode may have an unfavorable effect on the electrochemical characteristics and safety of a nonaqueous electrolyte secondary battery.

A plant-derived char also contains alkali metals other than potassium (e.g., sodium), alkaline earth metals (e.g., magnesium and calcium), transition metals (e.g., iron and copper), and other metals. When the carbonaceous material contains these metals, impurities elute from a negative electrode of an electrochemical device into an electrolyte solution during dedoping, which may have an unfavorable effect on the battery performance and compromise the safety.

Further, it has been confirmed by the studies conducted by the present inventors that pores of a carbonaceous material are blocked by an ash content and this adversely affects the charge-discharge volumetric capacity of a battery.

Therefore, it is desirable to reduce such an ash content (alkali metals, alkaline earth metals, transition metals, and other elements) contained in the plant-derived char by a demineralization treatment prior to the calcining step performed as required for obtaining the carbonaceous material. A demineralization method is not particularly restricted and, for example, a method of extracting and demineralizing metal components with an acidic water containing a mineral acid such as hydrochloric acid or sulfuric acid, or an organic acid such as acetic acid or formic acid (liquid-phase demineralization); or a method of performing demineralization through exposure to a high-temperature gas phase containing a halogen compound such as hydrogen chloride (gas-phase demineralization) may be employed. The gas-phase demineralization, which is preferred since it does not require a drying treatment after demineralization, will now be described although it is not intended to restrict the demineralization method to be applied. It is noted here that a demineralized plant-derived char is hereinafter also referred to as "plant-derived char carbon precursor".

In the gas-phase demineralization, the plant-derived char is preferably heat-treated in a gas phase containing a halogen compound. The halogen compound is not particularly restricted, and examples thereof include fluorine, chlorine, bromine, iodine, hydrogen fluoride, hydrogen chloride, hydrogen bromide, iodine bromide, chlorine fluoride (ClF), iodine chloride (ICl), iodine bromide (IBr), and bromine chloride (BrCl). Compounds generating these halogen compounds by thermal decomposition, or a mixture thereof can be used as well. From the standpoints of the stability and the supply stability of the halogen compound to be used, the halogen compound is preferably hydrogen chloride.

In the gas-phase demineralization, the halogen compound may be mixed with an inert gas. The inert gas is not particularly restricted as long as it is a gas that does not react with the carbon component constituting the plant-derived char. Examples of the inert gas include nitrogen, helium, argon, krypton, and a mixed gas of these inert gases. From the standpoints of supply stability and economic efficiency, the inert gas is preferably nitrogen.

In the gas-phase demineralization, a mixing ratio of the halogen compound and the inert gas is not restricted as long as sufficient demineralization can be achieved and, for example, from the standpoints of safety, economic efficiency and persistence in carbon, the amount of the halogen compound with respect to the inert gas is preferably 0.01% by volume to 10% by volume, more preferably 0.05% by volume to 8% by volume, still more preferably 0.1% by volume to 5% by volume.

The temperature of the gas-phase demineralization may vary depending on the plant-derived char that is the demineralization object and, from the standpoint of the ease of adjusting the potassium content, the iron content, the elemental nitrogen content, the elemental oxygen content and the like to be in the respective preferred ranges, the demineralization can be performed at, for example, 500°C to 980°C, preferably 600°C to 950°C, more preferably 650°C to 940°C, still more preferably 850°C to 930°C. When the demineralization temperature is excessively low, the demineralization efficiency is reduced and sufficient demineralization may not be achieved. When the demineralization temperature is excessively high, activation by the halogen compound may occur.

The duration of the gas-phase demineralization is not particularly restricted and, from the standpoints of the economic efficiency of the reaction equipment and the structure retainability of the carbon component, it is, for example, 5 minutes to 300 minutes, preferably 10 minutes to 200 minutes, more preferably 20 minutes to 150 minutes.

By the gas-phase demineralization, for example, potassium and iron contained in the plant-derived char can be removed. From the standpoint of increasing the dedoping capacity as well as the standpoint of reducing the non-dedoping capacity, the elemental potassium content in the carbon precursor obtained after the gas-phase demineralization is preferably 0.1% by mass or less, more preferably 0.05% by mass or less, still more preferably 0.03% by mass or less. From the standpoint of increasing the dedoping capacity as well as the standpoint of reducing the non-dedoping capacity, the elemental iron content in the carbon precursor obtained after the gas-phase demineralization is preferably 0.02% by mass or less, more preferably 0.015% by mass or less, still more preferably 0.01% by mass or less. When the amount of elemental potassium and elemental iron contained in the carbon precursor is large, the dedoping capacity may be decreased in an electrochemical device in which the resulting carbonaceous material is used. In addition, the non-dedoping capacity may be increased. Moreover, when these metal elements are eluted into the electrolyte solution and reprecipitated, a short circuit may occur and cause a major problem in safety of the electrochemical device. It is particularly preferred that the plant-derived char carbon precursor after the gas-phase demineralization contain substantially no elemental potassium or elemental iron. The details of the measurement of the elemental potassium content and the elemental iron content are as described above. The elemental potassium content and the elemental iron content in the carbon precursor are usually 0% by mass or higher.

The particle size of the plant-derived char that is the gas-phase demineralization object is not particularly restricted; however, an excessively small particle size can make it difficult to separate the gas phase containing removed potassium and the plant-derived char. Therefore, a lower limit of the average particle size $D_{50}$ of the plant-derived char is preferably 100 $\mu$m or larger, more preferably 300 $\mu$m or larger, still more preferably 500 $\mu$m or larger. Further, from the standpoint of the fluidity in a mixed gas stream, an upper limit of the average particle size $D_{50}$ is preferably 10,000 $\mu$m or smaller, more preferably 8,000 $\mu$m or smaller, still more preferably 5,000 $\mu$m or smaller.

An apparatus used for the gas-phase demineralization is not particularly restricted as long as the apparatus is capable of heating the plant-derived char and a gas phase containing a halogen compound with mixing. For example, a fluidized reactor can be used for performing a continuous-type or a bath-type in-layer flow method with a fluidized bed or the like. The supply amount (flow rate) of the gas phase is not particularly restricted and, from the standpoint of the fluidity in a mixed gas stream, the gas phase is supplied in an amount of, for example, preferably not less than 1 ml/min, more preferably not less than 5 ml/min, still more preferably not less than 10 ml/min, per 1 g of the plant-derived char.

In the gas-phase demineralization, after a heat treatment in an inert gas atmosphere containing a halogen compound (hereinafter, also referred to as "halogen heat treatment"), it is preferred to further perform a heat treatment in the absence of a halogen compound (hereinafter, also referred to as "gas-phase deoxygenation treatment"). Since a halogen is incorporated into the plant-derived char by the halogen heat treatment, it is preferred to remove the halogen incorporated into the plant-derived char by the gas-phase deoxygenation treatment. Specifically, the gas-phase deoxygenation treatment is performed by heat-treating the plant-derived char in an inert gas atmosphere containing no halogen compound at, for example, 500°C to 980°C, preferably 600°C to 950°C, more preferably 650°C to 940°C, still more preferably 850°C to 930°C, and the temperature of this heat treatment is preferably the same as or higher than the temperature of the first heat treatment. For example, the halogen can be removed by performing a heat treatment with the supply of the halogen compound being blocked after the halogen heat treatment. The duration of the gas-phase deoxygenation treatment is not particularly restricted, and it is preferably 5 minutes to 300 minutes, more preferably 10 minutes to 200 minutes, still more preferably 10 minutes to 100 minutes.

The average particle size $D_{50}$ and the basic flowability energy BFE of the carbon precursor can be adjusted through the pulverization step and/or the classification step. The pulverization step and/or the classification step is/are preferably performed after the demineralization treatment.

The below-described calcining step is performed as required and, when the calcining step is performed, from the standpoint of coatability in the electrode production, it is preferred to pulverize and/or classify the carbon precursor in the pulverization step and/or the classification step before the calcining step such that the carbonaceous material of the present embodiment after the calcining step has an average particle size $D_{50}$ of 30 $\mu$m or larger and a basic flowability energy BFE in a prescribed range under specific conditions. Only either of the pulverization step and the classification step may be performed, or both of the pulverization step and the classification step may be performed. Alternatively, the carbonaceous material can be adjusted to have an average particle size $D_{50}$ of 30 $\mu$m or larger and a basic flowability energy BFE in a prescribed range under specific conditions by performing the pulverization step and/or the classification step after the calcining step of the carbon precursor. In other words, in the present embodiment, the pulverization step and/or the classification step may be performed before the calcining step, after the calcining step, or both before and after the calcining step.

Depending on the conditions of the below-described main calcining performed as required, the carbon precursor does not shrink or may shrink by about 0 to 20%. Therefore, in a case where the below-described calcining step is performed and the pulverization step and/or the classification step is/are performed only before the calcining step, the pulverization and/or the classification may be performed while taking into consideration the shrinkage such that the carbonaceous material of the present embodiment after the calcining step has an average particle size $D_{50}$ of 30 $\mu$m or larger and a basic flowability energy BFE in a prescribed range under specific conditions. Specifically, the average particle size $D_{50}$ of the plant-derived char carbon precursor may be adjusted to be larger than a desired post-calcining average particle size $D_{50}$ by about 0 to 20%.

The carbon precursor obtained after the post-demineralization pulverization step and/or classification step can directly be the carbonaceous material of the present invention without being subjected to the below-described calcining step. Meanwhile, when the calcining step is performed, since the carbon precursor does not melt even with the below-described heat treatment step, the order of the pulverization step is not particularly restricted as long as it is after the demineralization step. From the standpoint of reducing the below-described specific surface area of the carbonaceous material, it is preferred to perform the pulverization step before the calcining step. This is because a sufficient reduction in the specific surface area may not be attained if the plant-derived char is mixed with a volatile organic substance as required and then calcined before pulverization. However, this is not intended to exclude performing the pulverization step after the calcining step.

A pulverizing apparatus used for the pulverization step is not particularly restricted and, for example, a jet mill, a ball mill, a bead mill, a hammer mill, or a rod mill can be used. In terms of pulverization efficiency, a system that performs pulverization through contact between particles, such as a jet mill, requires a long pulverization time and thus leads to a reduced volume efficiency; therefore, a system that performs pulverization in the presence of a pulverization medium, such as a ball mill or a bead mill, is preferred, and it is preferred to use a bead mill from the standpoint of avoiding contamination with impurities coming from the pulverization medium.

The classification step may be performed after the pulverization step. By the classification step performed after the pulverization step, the average particle size $D_{50}$ and the flowability energy BFE of the carbonaceous material, particularly the flowability energy BFE, can be adjusted more precisely. For example, in the classification step, fine powder having a particle size of about 0.1 $\mu$m to 10 $\mu$m, preferably 0.1 $\mu$m to 5 $\mu$m, can be removed along with excessively coarse particles.

A classification method is not particularly restricted, and examples thereof include classification using a sieve, wet classification, and dry classification. Examples of a wet classifier include classifiers utilizing the principle of gravitational classification, inertial classification, hydraulic classification, centrifugal classification or the like. Examples of a dry classifier include classifiers utilizing the principle of sedimentation classification, mechanical classification, centrifugal classification or the like.

Particularly, the content of fine powder having a particle size of about 0.1 $\mu$m to 10 $\mu$m, preferably 0.1 $\mu$m to 5 $\mu$m, is one example of the powder properties that greatly affect the value of the basic flowability energy BFE as described above. In the pulverization step and/or the classification step, it is preferred to adjust the content of fine powder not to be excessively low but to be appropriate such that the carbon precursor of the present embodiment has a basic flowability energy BFE in a prescribed range under specific conditions.

The specific surface area of the carbon precursor after the pulverization and/or the classification is preferably 30 $m^2/g$ to 800 $m^2/g$, more preferably 40 $m^2/g$ to 700 $m^2/g$, for example, 50 $m^2/g$ to 600 $m^2/g$. It is preferred to perform the pulverization step and/or the classification step in such a manner that the carbon precursor can be provided with a specific surface area in this range. It is noted here that only either of the pulverization step and the classification step may be performed, or both of the pulverization step and the classification step may be performed. When the specific surface area is excessively small, there are cases where fine pores of the carbonaceous material cannot be sufficiently reduced even with the below-described calcining step, making it difficult to reduce the hygroscopicity of the carbonaceous material. When moisture is present in the carbonaceous material, the generation of an acid accompanying hydrolysis of an electrolyte solution and the generation of a gas due to electrolysis of water may cause problems. In addition, oxidation of the carbonaceous material may progress under the air atmosphere to cause a significant change in the battery performance. When the specific surface area is excessively large, a reduction in the specific surface area of the carbonaceous material may not be attained even with the below-described calcining step, and this may lead to, for example, a reduction in the utilization efficiency of a secondary battery. The specific surface area of the carbon precursor can also be adjusted by controlling the temperature of the gas-phase demineralization.

The method of producing the carbonaceous material may further comprise, as required, the step of calcining the carbon precursor or a mixture of the carbon precursor and a volatile organic substance in an inert gas atmosphere at 800°C to 1,400°C and thereby obtaining the carbonaceous material (hereinafter, also referred to as "the calcining step"). When the calcining step is not performed, the carbon precursor can directly be the carbonaceous material of the present invention as described above. The calcining step is preferably performed after the demineralization step, more preferably after the demineralization step, the pulverization step, and the classification step.

One example of a production method which comprises the calcining step in the process of obtaining the carbonaceous material will now be described.

The carbonaceous material of the present embodiment can be obtained by calcining a mixture of a carbon precursor and a volatile organic substance. By mixing and calcining the carbon precursor and the volatile organic substance, the BFE of the resulting carbonaceous material is likely to be adjusted in the above-described preferred range, and the specific surface area is likely to be reduced. In addition, the amount of carbon dioxide adsorbing to the carbonaceous material can be adjusted.

The mechanism in which the specific surface area of the carbonaceous material is reduced by mixing and calcining the carbon precursor and the volatile organic substance has not been elucidated in detail; however, it is believed as follows. Nevertheless, the present invention is not limited by the following description. It is believed that, when a plant-derived char carbon precursor and a volatile organic substance are mixed and calcined, a carbonaceous coating film obtained by a heat treatment of the volatile organic substance is formed on the surface of the plant-derived char carbon precursor. This carbonaceous coating film reduces the specific surface area of the carbonaceous material generated from the plant-derived char carbon precursor, and inhibits the formation of a film called SEI (Solid Electrolyte Interphase) by reaction between the carbonaceous material and ions to be utilized by an electrochemical device (e.g., lithium ions); therefore, the irreversible capacity is expected to be reduced. In addition, since the generated carbonaceous coating film can be doped and dedoped with the ions, a capacity-increasing effect can be expected as well.

The volatile organic substance is, for example, a thermoplastic resin or a low-molecular-weight organic compound. Specifically, examples of the thermoplastic resin include polystyrenes, polyethylenes, polypropylenes, poly(meth)acrylic acids, and poly(meth)acrylic acid esters. It is noted here that the term "(meth)acryl" used herein is a general term for acryl and methacryl. Examples of the low-molecular-weight organic compound include toluene, xylene, mesitylene, styrene, naphthalene, phenanthrene, anthracene, and pyrene. The volatile organic substance is preferably one which does not oxidize or activate the surface of the carbon precursor when volatilized and thermally decomposed at a calcining temperature; therefore, the thermoplastic resin is preferably a polystyrene, a polyethylene, or a polypropylene. From the safety standpoint, it is preferred that the low-molecular-weight organic compound have a low volatility under normal temperature and thus be naphthalene, phenanthrene, anthracene, pyrene or the like.

Examples of the thermoplastic resins also include olefin-based resins, styrene-based resins, and (meth)acrylic acid-based resins. Examples of the olefin-based resins include polyethylenes, polypropylenes, random copolymers of ethylene and propylene, and block copolymers of ethylene and propylene. Examples of the styrene-based resins include polystyrenes, poly($\alpha$-methylstyrene), and copolymers of styrene and a (meth)acrylic acid alkyl ester (whose alkyl group has 1 to 12, preferably 1 to 6 carbon atoms). Examples of the (meth)acrylic acid-based resins include polyacrylic acids, polymethacrylic acids, and (meth)acrylic acid alkyl ester polymers (whose alkyl groups have 1 to 12, preferably 1 to 6 carbon atoms).

As the low-molecular-weight organic compound, for example, a hydrocarbon compound having 1 to 20 carbon atoms can be used. The number of carbon atoms of the hydrocarbon compound is preferably 2 to 18, more preferably 3 to 16. The hydrocarbon compound may be a saturated hydrocarbon compound or an unsaturated hydrocarbon compound, and may be a chain hydrocarbon compound or a cyclic hydrocarbon compound. In the case of an unsaturated hydrocarbon compound, its unsaturated bond may be a double bond or a triple bond, and the number of unsaturated bonds contained in one molecule is not particularly restricted. For example, the chain hydrocarbon compound is an aliphatic hydrocarbon compound, such as a linear or branched alkane, alkene, or alkyne. The cyclic hydrocarbon compound may be, for example, an alicyclic hydrocarbon compound (e.g., cycloalkane, cycloalkene, or cycloalkyne), or an aromatic hydrocarbon compound. Specific examples of the aliphatic hydrocarbon compound include methane, ethane, propane, butane, pentane, hexane, octane, nonane, decane, ethylene, propylene, butene, pentene, hexene, and acetylene. Examples of the alicyclic hydrocarbon compound include cyclopentane, cyclohexane, cycloheptane, cyclooctane, cyclononane, cyclopropane, cylcopentene, cyclohexene, cycloheptene, cyclooctene, decalin, norbornene, methylcyclohexane, and norbornadiene. Further, examples of the aromatic hydrocarbon compound include: monocyclic aromatic compounds, such as benzene, toluene, xylene, mesitylene, cumene, butylbenzene, styrene, $\alpha$-methylstyrene, o-methylstyrene, m-methylstyrene, p-methylstyrene, vinyl xylene, p-tert-butylstyrene, and ethylstyrene; and condensed polycyclic aromatic compounds having 3 to 6 rings, such as naphthalene, phenanthrene, anthracene, and pyrene, and the aromatic hydrocarbon compound is preferably a condensed polycyclic aromatic compound, more preferably naphthalene, phenanthrene, anthracene, or pyrene. The above-described hydrocarbon compounds may have an arbitrary substituent. The substituent is not particularly restricted, and examples thereof include alkyl groups having 1 to 4 carbon atoms (preferably alkyl groups having 1 to 2 carbon atoms), alkenyl groups having 2 to 4 carbon atoms (preferably alkenyl groups having 2 carbon atoms), and cycloalkyl groups having 3 to 8 carbon atoms (preferably cycloalkyl groups having 3 to 6 carbon atoms).

From the standpoints of the ease of mixing and avoidance of uneven distribution, the volatile organic substance is preferably in a solid state at normal temperature, and is more preferably a thermoplastic resin that is solid at normal temperature, such as a polystyrene, a polyethylene or a polypropylene, or a low-molecular-weight organic compound that is solid at normal temperature, such as naphthalene, phenanthrene, anthracene, or pyrene. The volatile organic substance is preferably one which does not oxidize or activate the surface of the plant-derived char carbon precursor when volatilized and thermally decomposed at a calcining temperature; therefore, the thermoplastic resin is preferably an olefin-based resin or a styrene-based resin, more preferably a polystyrene, a polyethylene, or a polypropylene. The low-molecular-weight organic compound preferably has a lower volatility under normal temperature for safety; therefore, it is preferably a hydrocarbon compound having 1 to 20 carbon atoms, more preferably a condensed polycyclic aromatic compound, still more preferably naphthalene, phenanthrene, anthracene, or pyrene. Moreover, from the standpoint of the ease of mixing with the carbon precursor, the volatile organic substance is preferably a thermoplastic resin, more preferably an olefin-based resin or a styrene-based resin, still more preferably a polystyrene, a polyethylene or a polypropylene, particularly preferably a polystyrene or a polyethylene.

From the standpoint of stable operation of a calcining apparatus, the volatile organic substance is an organic substance having a residual carbon ratio of preferably lower than 5% by mass, more preferably lower than 3% by mass. In the present invention, the residual carbon ratio is preferably a residual carbon ratio when ashing is performed at 800°C. The volatile organic substance is preferably a substance that yields a volatile substance (e.g., a hydrocarbon-based gas or a tar component) capable of reducing the specific surface area of the carbon precursor produced from a plant-derived char. Further, from the standpoint of maintaining the properties of the carbonaceous material generated after calcining, the residual carbon ratio is preferably lower than 5% by mass. When the residual carbon ratio is lower than 5%, a carbonaceous material locally having different properties is unlikely to be generated.

The residual carbon ratio can be determined by quantifying the carbon content of an ignition residue after ignition of a sample in an inert gas. As for the ignition, about 1 g of the volatile organic substance (the precise mass thereof is defined as $W_1$ (g)) is put into a crucible, and this crucible is heated in an electric furnace from normal temperature to 800°C at a heating rate of 10°C/min while circulating 20 liters of nitrogen per minute, followed by 1-hour ignition at 800°C. A residue obtained at this point is the ignition residue, and the mass thereof is defined as $W_2$ (g). Subsequently, for this ignition residue, an elemental analysis is performed in accordance with the method prescribed in JIS M8819 to determine the mass ratio $P_1$ (%) of carbon. The residual carbon ratio $P_2$ (% by mass) can be calculated by following formula.

$$P_2 = P_1 \times \frac{W_2}{W_1}$$

In cases where the carbon precursor and the volatile organic substance are mixed, the mass ratio of the carbon precursor and the volatile organic substance in the resulting mixture is not particularly restricted; however, the mass ratio of the carbon precursor and the volatile organic substance is preferably 97:3 to 40:60. The mass ratio of the carbon precursor and the volatile organic substance in the mixture is more preferably 95:5 to 60:40, still more preferably 93:7 to 80:20. For example, when amount of the volatile organic substance is 3 parts by mass or greater, the specific surface area can be sufficiently reduced. Further, when the amount of the volatile organic substance is 60 parts by mass or less, the effect of reducing the specific surface area is not saturated and the volatile organic substance is unlikely to be over-consumed, which is industrially advantageous.

The mixing of the carbon precursor with the volatile organic substance that is liquid or solid at normal temperature may be performed either before the pulverization step or after the pulverization step.

In the case of mixing the carbon precursor with the volatile organic substance before the pulverization step, the pulverization and the mixing can be performed at the same time by weighing and supplying the carbon precursor and the volatile organic substance that is liquid or solid at normal temperature simultaneously to a pulverization apparatus. Further, in the case of using a volatile organic substance that is gaseous at normal temperature, a method of mixing the volatile organic substance with the plant-derived char carbon precursor by circulating and thermally decomposing a non-oxidizing gas containing the gaseous volatile organic substance in a heat treatment apparatus containing the plant-derived char carbon precursor.

When the mixing is performed after the pulverization step, any known mixing method can be employed as long as it is a method by which both components are uniformly mixed. When the volatile organic substance is solid at normal temperature, it is preferably mixed in the form of particles, and the shape and the size of the particles are not particularly restricted. From the standpoint of uniformly dispersing the volatile organic substance in the pulverized carbon precursor, the average particle size $D_{50}$ of the volatile organic substance is preferably 0.1 $\mu$m to 2,000 $\mu$m, more preferably 1 $\mu$m to 1,000 $\mu$m, still more preferably 2 $\mu$m to 600 $\mu$m.

The above-described carbon precursor or mixture may contain a component other than the carbon precursor and the volatile organic substance. For example, the carbon precursor or mixture may contain natural graphite, artificial graphite, a metal-based material, an alloy-based material, or an oxide-based material. The content of the other component is not particularly restricted; however, it is preferably 50 parts by mass or less, more preferably 30 parts by mass or less, still more preferably 20 parts by mass or less, most preferably 10 parts by mass or less, with respect to 100 parts by mass of the carbon precursor or the mixture of the carbon precursor and the volatile organic substance.

In the calcining step of the production method, the carbon precursor or the mixture of the carbon precursor and the volatile organic substance is preferably calcined at 800°C to 1,400°C.

The calcining step may be either of: (a) the calcining step of performing main calcining by calcining the pulverized carbon precursor or mixture at 800°C to 1,400°C; and (b) the calcining step of pre-calcining the pulverized carbon precursor or mixture at 350°C to lower than 800°C and subsequently performing main calcining at 800°C to 1,400°C.

When the calcining step (a) is performed, it is believed that the carbon precursor is coated with a tar component and a hydrocarbon-based gas in the main calcining process. When the calcining step (b) is performed, it is believed that the carbon precursor is coated with a tar component and a hydrocarbon-based gas in the pre-calcining process.

One example of the procedures of the pre-calcining and the main calcining in the case of performing the calcining step will now be described; however, the present invention is not limited thereto.

(Pre-calcining)

The pre-calcining process can be performed by, for example, calcining the pulverized carbon precursor or mixture at a temperature of 350°C to lower than 800°C. By the pre-calcining process, volatile components (e.g., $CO_2$, CO, $CH_4$, and $H_2$) and the tar component can be removed. The generation of the volatile components and tar component in the main calcining process performed after the pre-calcining process can be reduced, so that the burden on a calcining apparatus can be mitigated.

The pre-calcining process is preferably performed at 350°C or higher, more preferably at 400°C or higher. The pre-calcining process can be performed in accordance with an ordinary pre-calcining procedure. Specifically, the pre-calcining can be performed in an inert gas atmosphere. Examples of the inert gas include nitrogen and argon. The pre-calcining may be performed under reduced pressure, and can be performed under a pressure of, for example, 10 kPa or lower. The duration of the pre-calcining is not particularly restricted, and the pre-calcining can be performed, for example, in a range of 0.5 hours to 10 hours, preferably 1 hour to 5 hours.

(Main Calcining)

The main calcining process can be performed in accordance with an ordinary main calcining procedure. By performing the main calcining, a carbonaceous material for a nonaqueous electrolyte secondary battery can be obtained.

A specific temperature of the main calcining process is preferably 800°C to 1,400°C, more preferably 1,000°C to 1,350°C, still more preferably 1,100°C to 1,300°C. The main calcining process is performed in an inert gas atmosphere. Examples of the inert gas include nitrogen and argon, and the main calcining can also be performed in an inert gas containing a halogen gas. The main calcining process may be performed under reduced pressure, and can be performed under a pressure of, for example, 10 kPa or lower. The duration of the main calcining process is not particularly restricted and, for example, the main calcining process can be performed for 0.05 hours to 10 hours, preferably 0.05 hours to 8 hours, more preferably 0.05 hours to 6 hours.

As described above, the resulting calcined product (carbonaceous material) may be adjusted to have an average particle size $D_{50}$ of 30 $\mu$m or larger and a basic flowability energy BFE in a prescribed range under specific conditions by performing the pulverization step and/or the classification step after the calcining step. Execution of the pulverization step and/or the classification step after the calcining step is advantageous for process control in that, for example, it prevents scattering of fine powder during the calcining.

(Negative Electrode for Electrochemical Device)

The negative electrode for an electrochemical device according to one embodiment of the present invention comprises the carbonaceous material of the above-described embodiment. Particularly, the negative electrode for an electrochemical device according to the present embodiment can be a negative electrode for a nonaqueous electrolyte secondary battery, which contains the carbonaceous material of the above-described embodiment.

A method of producing the negative electrode for an electrochemical device according to the present embodiment will now be described concretely. The negative electrode of the present embodiment can be produced by adding a binder to the carbonaceous material of the above-described embodiment, adding an appropriate amount of an appropriate solvent, kneading these materials to obtain an electrode mixture, subsequently applying and drying the electrode mixture onto a current collector formed from a metal sheet or the like, and then press-molding the resultant. In the present specification, a layer formed on the current collector after the press-molding is referred to as "negative electrode layer".

A conductive aid may be added to the carbonaceous material of the above-described embodiment. An addition of the conductive aid enables to produce an electrode having a higher conductivity. For the purpose of imparting even a higher conductivity, as required, the conductive aid can be added at the time of preparing the electrode mixture. As the conductive aid, for example, a conductive carbon black, vapor-grown carbon fibers (VGCF), or nanotubes can be used. Although the amount of the conductive aid to be added varies depending on the type of the conductive aid to be used, an expected conductivity may not be obtained when the added amount is excessively small, while an excessively large added amount may lead to poor dispersion in the electrode mixture. From this standpoint, the conductive aid is added at a ratio of preferably 0.5% by mass to 10% by mass (wherein, amount of active material (carbonaceous material) + amount of binder + amount of conductive aid = 100% by mass), more preferably 0.5% by mass to 7% by mass, particularly preferably 0.5% by mass to 5% by mass. The binder may be, for example, a PVDF (polyvinylidene fluoride), an SBR (styrene-butadiene rubber), a polytetrafluoroethylene, CMC (carboxymethyl cellulose), or a mixture thereof, and is not particularly restricted as long as it does not react with an electrolyte solution. Particularly, a PVDF is preferred since a PVDF adhered to the surface of an active material hardly inhibits the migration of ions utilized by an electrochemical device (e.g., lithium ions), so that good input-output characteristics are likely to be obtained. For the purpose of dissolving a PVDF to form a slurry, a polar solvent such as N-methylpyrrolidone (NMP) is preferably used. On the other hand, an aqueous emulsion of an SBR or the like, or CMC dissolved in water can be used as well. When the binder is added in an excessively large amount, the resistance of the resulting electrode is increased, as a result of which the battery internal resistance may be increased and the battery performance may be deteriorated. When the binder is added in an excessively small amount, the binding between the particles of the negative electrode material and between the negative electrode material and the current collector may be insufficient. Although a preferred amount of the binder to be added varies depending on the type of the binder to be used, for example, a PVDF-based binder is added in an amount of preferably 0.5% by mass to 5% by mass, more preferably 0.8% by mass to 4% by mass, still more preferably 1% by mass to 3% by mass. Meanwhile, as the binder in the case of using water as a solvent, an SBR or a mixture of plural binders, such as a mixture of SBR and CMC, can be used. A total amount of all binders to be used in the case of using water as a solvent is preferably 0.1% by mass to 5% by mass, more preferably 0.5% by mass to 3% by mass, still more preferably 0.8% by mass to 2% by mass.

A negative electrode layer is basically formed on both sides of the current collector; however, it may be formed only on one side as required. A larger volume of the negative electrode layer, particularly a greater thickness of the negative electrode layer is more preferred since it can increase the negative electrode ratio inside an electrochemical device to which the negative electrode layer is applied, and this leads to an increase in the capacity. For example, the thickness of the negative electrode layer (per side) varies depending on the type and the size of the electrochemical device to which the negative electrode layer is applied; however, it is preferably 100 $\mu$m or greater, more preferably 120 $\mu$m or greater, still more preferably 130 $\mu$m or greater, yet still more preferably 150 $\mu$m or greater, further preferably 160 $\mu$m or greater. This is because, although the thickness of a negative electrode layer normally used in a lithium ion secondary battery or the like is, for example, about 20 $\mu$m to 60 $\mu$m, the carbonaceous material of the above-described embodiment can exhibit an excellent charge-discharge volumetric capacity even when the thickness of the negative electrode layer is large in particular and, therefore, the effect of the carbonaceous material is favorably exerted in a negative electrode having a thickness in such a range. An upper limit of the thickness of the negative electrode layer (per side) is usually not particularly restricted; however, the input-output characteristics can be easily improved and made suitable for an electrochemical device by controlling the thickness of the negative electrode layer (per side) to be, for example, 10 mm or less, particularly 5 mm or less, more particularly 1 mm or less, still more particularly 500 $\mu$m or less, yet still more particularly 280 $\mu$m or less. In the present specification, the thickness of a negative electrode layer can be determined as a value obtained by measuring the thickness in the negative electrode thickness direction including a current collector by using a micrometer or the like, and subsequently subtracting the thickness of the current collector from the thus measured thickness.

The density of the negative electrode for an electrochemical device according to the present embodiment, i.e.

a value (g/cm$^3$) obtained by dividing the mass (g) of the carbonaceous material of the above-described embodiment by the volume (cm$^3$) of the negative electrode layer, is preferably higher than 0.95 g/cm$^3$, more preferably higher than 0.97 g/cm$^3$, still more preferably 0.98 g/cm$^3$ or higher, yet still more preferably 1 g/cm$^3$ or higher. The higher the negative electrode density, the larger is the volumetric capacity of the electrochemical device.

(Electrochemical Device)

The electrochemical device according to one embodiment of the present invention comprises the negative electrode for an electrochemical device according to the above-described embodiment. Particularly, the electrochemical device of the present embodiment can be a nonaqueous electrolyte secondary battery that comprises the negative electrode for an electrochemical device according to the above-described embodiment.

This electrochemical device exhibits a good volumetric capacity and has an excellent discharge capacity retention rate even when particularly the volume of the negative electrode layer therein is increased. This is because, by the use of the above-described specific carbonaceous material as a negative electrode material, the negative electrode ratio inside the device can be effectively increased while maintaining a good volumetric capacity.

When the negative electrode of the electrochemical device is formed using the carbonaceous material of the above-described embodiment, other materials of a positive electrode, a separator, an electrolyte solution and the like that constitute the electrochemical device (e.g., a secondary battery or a capacitor) are not particularly restricted. In the electrochemical device, a variety of materials that have been conventionally used or proposed can be used.

For example, as the positive electrode material, layered oxide-based (represented by $LiMO_2$, wherein M is a metal: e.g., $LiCoO_2$, $LiNiO_2$, $LiMnO_2$, or $LiNi_xCo_yMo_zO_2$ (wherein, x, y, and z each represent a composition ratio)), olivine-based (represented by $LiMPO_4$, wherein M is a metal: e.g., $LiFePO_4$), and spinel-based (represented by $LiM_2O_4$, wherein M is a metal: e.g., $LiMn_2O_4$) composite metal chalcogen compounds are preferred, and these chalcogen compounds may be mixed as required. A positive electrode is formed by molding the positive electrode material along with an appropriate binder and a carbon material for imparting conductivity to the electrode and thereby forming a layer on a conductive current collector.

When a combination of these positive electrode and negative electrode is applied to the electrochemical device, for example, a nonaqueous solvent-type electrolyte solution can be used. The nonaqueous solvent-type electrolyte solution is generally formed by dissolving an electrolyte in a nonaqueous solvent. As the nonaqueous solvent, for example, one or a combination of two or more of organic solvents, such as propylene carbonate, ethylene carbonate, dimethyl carbonate, diethyl carbonate, dimethoxyethane, diethoxyethane, $\gamma$-butyrolactone, tetrahydrofuran, 2-methyltetrahydrofuran, sulfolane, and 1,3-dioxolane, can be used. As the electrolyte, for example, $LiClO_4$, $LiPF_6$, $LiBF_4$, $LiCF_3SO_3$, $LiAsF_6$, LiCl, LiBr, $LiB(C_6H_5)_4$, or $LiN(SO_3CF_3)_2$ can be used.

For example, a nonaqueous electrolyte secondary battery is generally formed by immersing a positive electrode and a negative electrode, which are formed in the above-described manner and arranged to face with each other across, as required, a liquid-permeable separator made of a nonwoven fabric, other porous material or the like, in an electrolyte solution. As the separator, a permeable separator made of a nonwoven fabric normally used in a secondary battery or other porous material can be used. Alternatively, a solid electrolyte made of a polymer gel impregnated with an electrolyte solution may be used instead of or together with the separator.

The carbonaceous material for an electrochemical device according to the present invention is suitable as, for example, a carbonaceous material for a battery mounted on a vehicle such as an automobile, typically a nonaqueous electrolyte secondary battery for driving a vehicle. The term "vehicle" used herein refers to, but not particularly limited to: a vehicle generally known as an electric vehicle, a hybrid vehicle with a fuel cell and an internal combustion engine. The vehicle comprises at least: a power supply unit provided with the battery according to one embodiment of the present invention; an electric drive mechanism driven by the power supplied from the power supply unit; and a control device which controls this mechanism. The vehicle further may further comprise a mechanism which is provided with a dynamic brake and a regenerative brake and converts the energy generated by braking into electricity to charge the above-described nonaqueous electrolyte secondary battery.

EXAMPLES

The present invention will now be described concretely by way of Examples thereof; however, the scope of the present invention is not restricted thereto. Methods of measuring the physical properties of a carbonaceous material for an electrochemical device and those of a negative electrode layer using the carbonaceous material are described below. The physical properties and the measurements (or physical property values and measured values) that are described in the present specification including the below-described Examples are based on the values determined by the following respective methods.

(Measurement of Average Particle Size D$_{50}$ by Laser Scattering Method)

The average particle size D$_{50}$ (particle size distribution) of a carbon precursor and that of a carbonaceous material were measured by the following method. Each sample of the carbon precursors and carbonaceous materials prepared in the below-described Examples and Comparative Examples was added to an aqueous solution containing 0.3% by mass of a surfactant ("Toriton X100", manufactured by Wako Pure Chemical Industries, Ltd.), and treated by an ultrasonic cleaner for at least 10 minutes to be dispersed in the aqueous solution. The particle size distribution was measured using the thus obtained dispersion. The measurement of the particle size distribution was performed using a particle size/particle size distribution analyzer ("MICROTRAC M T3000", manufactured by Nikkiso Co., Ltd.). The particle size at a cumulative volume of 50% was defined as the average particle size D$_{50}$.

(Measurement of Basic Flowability Energy BFE)

The basic flowability energy BFE of a powder of each sample of the carbonaceous materials prepared in the below-described Examples and Comparative Examples was measured using a powder rheometer FT4 manufactured by Freeman Technology Ltd. Specifically, the basic flowability energy BFE was measured by the following operations. First, 120 mL of a powder of the sample of each carbonaceous material was filled into a measuring vessel (diameter = 50 mm, volume = 160 ml). A measuring blade (blade radius R = 48 mm, helix angle $\alpha$ = 5°) was put into the powder-filled measuring vessel while being rotated at a blade tip speed of 100 mm/sec, and the normal stress F and the rotational torque T were measured using a load cell on the bottom of the rheometer and an upper torque meter, respectively. These measured values of the normal stress F and the rotational torque T, along with the above-described values of the blade radius (R = 48 mm) and the helix angle ($\alpha$ = 5°), were substituted into the following formula: BFE = T/(Rtan$\alpha$) + F to calculate the basic flowability energy BFE (J), which is a value of the transfer energy (J) of the blade corresponding to the blade height.

(Measurement of Average Interplanar Spacing d$_{002}$ Using Bragg Equation in Accordance with Wide-Angle X-Ray Diffraction Method)

Using "MiniFlex II" manufactured by Rigaku Corporation, a powder of each carbonaceous material prepared in the below-described Examples and Comparative Examples was loaded to a sample holder, and an X-ray diffraction pattern was obtained using a CuK$\alpha$ ray monochromatized through an Ni filter as a radiation source. A peak position of the diffraction pattern was determined by a centroid method (a method of determining the centroid position of a diffraction line to determine a peak position at a corresponding value of 2$\theta$) and then corrected with a diffraction peak of the (111) plane of high-purity silicone powder used as a standard substance. The wavelength $\lambda$ of the CuK$\alpha$ ray was set at 0.15418 nm, and the value of d$_{002}$ was calculated by the following Bragg equation.

$$d_{002} = \frac{\lambda}{2 \cdot \sin\theta} \qquad \left(Bragg\ equation\right)$$

(Measurement of Metal Contents)

The elemental potassium content and the elemental iron content were measured by the following method. A carbon sample containing prescribed amounts of elemental potassium and elemental iron was prepared in advance and, using a fluorescent X-ray analyzer, calibration curves were prepared with regard to the relationship between the intensity of potassium K$\alpha$ ray and the elemental potassium content as well as the relationship between the intensity of iron K$\alpha$ ray and the elemental iron content. Next, for each powder sample of the carbonaceous materials prepared in the below-described Examples and Comparative Examples, the intensity of potassium K$\alpha$ ray and that of iron K$\alpha$ ray were measured in a fluorescent X-ray analysis, and the elemental potassium content and the elemental iron content were determined based on the above-prepared calibration curves. The fluorescent X-ray analysis was performed using LAB CENTER XRF-1700 manufactured by Shimadzu Corporation under the following conditions. A holder for upper-part irradiation was used for controlling a sample measurement area to be the inside of a circle of 20 mm in diameter. For setting the sample to be measured, 0.5 g of the sample was placed in a polyethylene container having an inner diameter of 25 mm and, with the back thereof being held with a plankton net, the measurement surface was covered with a polypropylene film to perform the measurement. The X-ray source was set at 40 kV and 60 mA. For potassium, the measurement was performed in a 2$\theta$ range of 90° to 140° at a scanning speed of 8°/min using LiF(200) as an analyzing crystal and a gas flow-type proportional counter tube as a detector. For iron, the measurement was performed in a 2θ range of 56° to 60° at a scanning speed of 8°/min using LiF(200) as an analyzing crystal and a scintillation counter as a detector.

(Measurement of True Density by Butanol Method)

The true density $\rho_{Bt}$ was measured by a butanol method in accordance with the method prescribed in JIS R7212. The mass ($m_1$) of a pycnometer equipped with a side tube of about 40 mL in internal volume was measured precisely. Next, after each powder sample of the carbonaceous materials prepared in the below-described Examples and Comparative Examples was placed evenly at a thickness of about 10 mm on the bottom of the pycnometer, the mass ($m_2$) of the pycnometer was measured precisely. Subsequently, 1-butanol was slowly added to the pycnometer to a depth of about 20 mm from the bottom. Then, the pycnometer was gently vibrated and it was confirmed that large air bubbles were no longer generated, after which the pycnometer was placed in a vacuum desiccator and gradually evacuated to a pressure of 2.0 to 2.7 kPa. This pressure was maintained for at least 20 minutes and, after the generation of air bubbles stopped, the pycnometer was taken out, further filled with 1-butanol, sealed with a cap, and then immersed in a thermostat water bath (adjusted to 30 ± 0.03°C) for at least 15 minutes, and the liquid surface of 1-butanol was leveled with a marked line. Subsequently, the pycnometer was taken out and cooled to room temperature with the outside thereof being thoroughly wiped, followed by precise measurement of the mass ($m_4$). Thereafter, the same pycnometer was filled with only 1-butanol and immersed in a thermostat water bath in the same manner as described above, and the mass ($m_3$) was measured after the liquid surface was leveled with the marked line. In addition, distilled water from which dissolved gas had been removed by boiling immediately before use was placed in the pycnometer. This pycnometer was immersed in a thermostat water bath in the same manner as described above, and the mass ($m_5$) was measured after the liquid surface was leveled with the marked line. The true density $\rho_{Bt}$ was calculated using the following formula, wherein d is the specific gravity (0.9946) of water at 30°C.

$$\rho_{Bt} = \frac{m_2 - m_1}{m_2 - m_1 - (m_4 - m_3)} \times \frac{m_3 - m_1}{m_5 - m_1} d$$

($^7$Li Solid-State NMR)

A slurry was obtained by mixing 96.2 parts by mass of each carbonaceous material prepared in the below-described Examples and Comparative Examples, 2 parts by mass of a conductive carbon black ("Super-P (registered trademark)", manufactured by TIMCAL Ltd.), 1 part by mass of CMC, a prescribed amount of SBR, and water. The thus obtained slurry was applied to a copper foil, dried, and then pressed to obtain a carbon electrode. The thus obtained carbon electrode was used as a working electrode, while metal lithium was used as a counter electrode. As a solvent, a mixture of ethylene carbonate, dimethyl carbonate and ethyl methyl carbonate (volume ratio = 1:1:1) was used. In this solvent, 1 mol/L of $LiPF_6$ was dissolved and used as an electrolyte. As a separator, a polypropylene film was used. A coin cell was produced in a glove box under an argon atmosphere.

The thus produced coin cell was doped up to 0 mV with a current density of 0.2 mA/cm$^2$ in terms of the amount of electricity, and subsequently charged to a specific capacity of 1,000 mAh/g, whereby a carbon electrode doped with lithium ion to a fully-charged state was obtained. After the completion of the doping, the doping was suspended for 2 hours, and the carbon electrode was taken out under an argon atmosphere, after which the electrolyte solution was wiped off, and the resulting carbon electrode was entirely added to a sample tube for NMR.

For NMR analysis, the MAS-$^7$Li-NMR was measured using a nuclear magnetic resonance apparatus ("AVANCE 300", manufactured by Bruker AXS GmbH). In this measurement, lithium chloride was used as a standard substance, and the peak of lithium chloride was set at 0 ppm.

(Measurement of Negative Electrode Layer Thickness)

The negative electrode layer thickness was defined as a value obtained by measuring the thickness of each negative electrode layer prepared in the below-described Examples and Comparative Examples using a micrometer, and subsequently subtracting the thickness of a current collector from the thus measured thickness.

(Negative Electrode Density)

The negative electrode density (g/cm$^3$) was defined as a value (g/cm$^3$) obtained by dividing the mass (g) of each carbonaceous material that was mixed in a slurry at the time of preparing a negative electrode layer in the below-described Examples and Comparative Examples, by the volume ($cm^3$) of the thus prepared negative electrode layer. The volume of a negative electrode layer was calculated from the thickness and the diameter (14 mm) of the negative electrode layer.

(Example 1)

A coconut shell was dry-distilled at 500°C and then crushed to a obtain coconut shell char having an average particle size of about 2 mm. For 100 g of this coconut shell char, a halogen heat treatment was performed at 900°C for 30 minutes while supplying a nitrogen gas containing 1% by volume of hydrogen chloride gas at a flow rate of 18 L/min. Subsequently, only the supply of hydrogen chloride gas was stopped and, while supplying a nitrogen gas at a flow rate of 18 L/min, the coconut shell char was further heat-treated at 900°C for 30 minutes to perform gas-phase deoxygenation, whereby a carbon precursor was obtained. The thus obtained carbon precursor was coarsely pulverized to an average particle size of 44 $\mu$m using a ball mill, and subsequently further pulverized and classified using a compact jet mill (Co-Jet System $\alpha$-mkIII, manufactured by Seishin Enterprise Co., Ltd.) to obtain a carbon precursor having an average particle size $D_{50}$ of 50 $\mu$m.

The thus prepared carbon precursor in an amount of 6.4 g was mixed with 0.6 g of a polystyrene (manufactured by Sekisui Kasei Co., Ltd., average particle size = 400 $\mu$m, residual carbon ratio = 1.2%). Subsequently, 7 g of the resulting mixture was put into a graphite sheath such that the sample layer height was about 3 mm, and this sheath was heated to 1,310°C at a heating rate of 10°C/min under a nitrogen flow rate of 6 L/min in a tubular furnace (manufactured by Motoyama Inc.) and then retained for 10 minutes, followed by natural cooling. A carbonaceous material was recovered from the furnace once it was confirmed that the temperature inside the furnace was reduced to 200°C or lower. The thus recovered carbonaceous material had an average particle size $D_{50}$ of 50 $\mu$m and a basic flowability energy BFE of 340 mJ. The recovered non-graphitizable carbonaceous material had an amount of 6.2 g and a yield of 89%.

A slurry was obtained by mixing 96.2 parts by mass of the thus obtained carbonaceous material, 2 parts by mass of a conductive carbon black ("Super-P (registered trademark)", manufactured by TIMCAL Ltd.), 1 part by mass of CMC, 0.8 parts by mass of SBR, and water. The thus obtained slurry was applied to a copper foil, dried and then pressed to obtain a 160 $\mu$m-thick negative electrode (negative electrode layer).

In the above-described manner, a carbonaceous material was obtained and a negative electrode containing the carbonaceous material was prepared thereafter. The conditions during calcining performed in the production of the carbonaceous material, the physical properties of the carbonaceous material, and the physical properties of the thus prepared negative electrode layer are shown together in Table 1 below.

(Example 2)

A carbonaceous material having an average particle size $D_{50}$ of 50 $\mu$m and a basic flowability energy BFE of 340 mJ was obtained and a 280 $\mu$m-thick negative electrode (negative electrode layer) was prepared using this carbonaceous material in the same manner as in Example 1, except that the thickness was changed in the formation of the negative electrode layer. The conditions during calcining performed in the production of the carbonaceous material, the physical properties of the carbonaceous material, and the physical properties of the thus prepared negative electrode layer are shown together in Table 1 below.

(Example 3)

A carbonaceous material having an average particle size $D_{50}$ of 50 $\mu$m and a basic flowability energy BFE of 352 mJ was obtained and a 160 $\mu$m-thick negative electrode (negative electrode layer) was prepared using this carbonaceous material in the same manner as in Example 1, except that the polystyrene was not mixed at the time of calcining. The conditions during calcining performed in the production of the carbonaceous material, the physical properties of the carbonaceous material, and the physical properties of the thus prepared negative electrode layer are shown together in Table 1 below.

(Example 4)

A carbonaceous material having an average particle size $D_{50}$ of 50 $\mu$m and a basic flowability energy BFE of 332 mJ was obtained and a 160 $\mu$m-thick negative electrode (negative electrode layer) was prepared using this carbonaceous material in the same manner as in Example 1, except that the amount of the mixture added at the time of calcining was changed to 50 g and the mixture was put into the sheath such that the sample layer height was about 20 mm. The conditions during calcining performed in the production of the carbonaceous material, the physical properties of the carbonaceous material, and the physical properties of the thus prepared negative electrode layer are shown together in Table 1 below.

(Example 5)

A carbonaceous material having an average particle size $D_{50}$ of 38 $\mu$m and a basic flowability energy BFE of 301 mJ was obtained and a 160 $\mu$m-thick negative electrode (negative electrode layer) was prepared using this carbonaceous material in the same manner as in Example 1, except that the pulverization was performed more finely so as to allow the carbon precursor and the carbonaceous material to have a smaller average particle size $D_{50}$, and that the classification was performed as appropriate so as to remove fine powder and excessively large particles. The conditions during calcining performed in the production of the carbonaceous material, the physical properties of the carbonaceous material, and the physical properties of the thus prepared negative electrode layer are shown together in Table 1 below.

(Example 6)

A carbonaceous material having an average particle size $D_{50}$ of 42 $\mu$m and a basic flowability energy BFE of 573 mJ was obtained and a 160 $\mu$m-thick negative electrode (negative electrode layer) was prepared using this carbonaceous material in the same manner as in Example 1, except that the ratio of the amount of fine powder was adjusted by the classification step such that the basic flowability energy BFE was increased. The conditions during calcining performed in the production of the carbonaceous material, the physical properties of the carbonaceous material, and the physical properties of the thus prepared negative electrode layer are shown together in Table 1 below.

(Comparative Example 1)

A carbonaceous material having an average particle size $D_{50}$ of 5 $\mu$m and a basic flowability energy BFE of 125 mJ was obtained and a 160 $\mu$m-thick negative electrode (negative electrode layer) was prepared using this carbonaceous material in the same manner as in Example 1, except that the pulverization was performed extremely finely so as to allow the carbon precursor and the carbonaceous material to have an extremely small average particle size $D_{50}$, and that the classification was performed so as to remove fine powder and most of large particles. The conditions during calcining performed in the production of the carbonaceous material, the physical properties of the carbonaceous material, and the physical properties of the thus prepared negative electrode layer are shown together in Table 1 below.

(Comparative Example 2)

A carbonaceous material having an average particle size $D_{50}$ of 5 $\mu$m and a basic flowability energy BFE of 125 mJ was obtained and a 160 $\mu$m-thick negative electrode (negative electrode layer) was prepared using this carbonaceous material in the same manner as in Comparative Example 1, except that the amount of SBR used for the formation of the negative electrode layer was increased to 1.5% by mass. The conditions during calcining performed in the production of the carbonaceous material, the physical properties of the carbonaceous material, and the physical properties of the thus prepared negative electrode layer are shown together in Table 1 below.

(Comparative Example 3)

A carbonaceous material having an average particle size $D_{50}$ of 50 $\mu$m and a basic flowability energy BFE of 1,140 mJ was obtained and a 160 $\mu$m-thick negative electrode (negative electrode layer) was prepared using this carbonaceous material in the same manner as in Example 1, except that the classification step was enhanced and the amount of fine powder was thereby controlled to be extremely small such that a very large basic flowability energy BFE was obtained. The conditions during calcining performed in the production of the carbonaceous material, the physical properties of the carbonaceous material, and the physical properties of the thus prepared negative electrode layer are shown together in Table 1 below.

(Comparative Example 4)

A carbonaceous material having an average particle size $D_{50}$ of 5 $\mu$m and a basic flowability energy BFE of 112 mJ was obtained and a 160 $\mu$m-thick negative electrode (negative electrode layer) was prepared using this carbonaceous material in the same manner as in Comparative Example 1, except that the polystyrene was not mixed at the time of calcining. The conditions during calcining performed in the production of the carbonaceous material, the physical properties of the carbonaceous material, and the physical properties of the thus prepared negative electrode layer are shown together in Table 1 below.

(Comparative Example 5)

A carbonaceous material having an average particle size $D_{50}$ of 5 $\mu$m and a basic flowability energy BFE of 112 mJ was obtained and a 160 $\mu$m-thick negative electrode (negative electrode layer) was prepared using this carbonaceous material in the same manner as in Comparative Example 1, except that the polystyrene was not mixed at the time of calcining and the amount of SBR used for the formation of the negative electrode layer was increased to 1.5% by mass. The conditions during calcining performed in the production of the carbonaceous material, the physical properties of the carbonaceous material, and the physical properties of the thus prepared negative electrode layer are shown together in Table 1 below.

(Comparative Example 6)

A carbonaceous material having an average particle size $D_{50}$ of 25 $\mu$m and a basic flowability energy BFE of 260 mJ was obtained and a 160 $\mu$m-thick negative electrode (negative electrode layer) was prepared using this carbonaceous material in the same manner as in Example 5, except that the pulverization was performed even more finely so as to allow the carbon precursor and the carbonaceous material to have a slightly smaller average particle size $D_{50}$, and that the classification was performed as appropriate so as to remove fine powder and excessively large particles. The conditions during calcining performed in the production of the carbonaceous material, the physical properties of the carbonaceous material, and the physical properties of the thus prepared negative electrode layer are shown together in Table 1 below.

[Table 1]

| | | $D_{50}$ (μm) | BFE (mJ) | Additive added at the time of calcining | Amount of carbon precursor (and PSt) added at the time of calcining (g) | Sheath layer height at the time of calcining (mm) | $d_{002}$ (nm) | Potassium content (% by mass) | Iron content mass) (% by | Butanol true density (g/cc) | NMR shift value (ppm) | SBR mass ratio (%) | Negative Electrode layer thickness (μm) | Negative Electrode density (g/cm$^3$) |
|---|---|---|---|---|---|---|---|---|---|---|---|---|---|---|
| Example | 1 | 50 | 340 | PSt | 7 | 3 | 0.386 | 0.0025 | 0.002 | 1.47 | 126 | 0.8 | 160 | 1.02 |
| | 2 | 50 | 340 | PSt | 7 | 3 | 0.386 | 0.0025 | 0.002 | 1.47 | 119 | 0.8 | 280 | 1.03 |
| | 3 | 50 | 352 | none | 7 | 3 | 0.384 | 0.0021 | 0.0023 | 1.48 | 119 | 0.8 | 160 | 1.02 |
| | 4 | 50 | 332 | PSt | 50 | 20 | 0.385 | 0.0021 | 0.002 | 1.47 | 109 | 0.8 | 160 | 1.03 |
| | 5 | 38 | 301 | PSt | 7 | 3 | 0.384 | 0.0023 | 0.0022 | 1.47 | 121 | 0.8 | 160 | 1.02 |
| | 6 | 43 | 573 | PSt | 7 | 3 | 0.384 | 0.0022 | 0.0024 | 1.47 | 124 | 0.8 | 160 | 1.00 |
| Comparative Example | 1 | 5 | 125 | PSt | 7 | 3 | 0.385 | 0.0022 | 0.0025 | 1.48 | × | 0.8 | 160 | × |
| | 2 | 5 | 125 | PSt | 7 | 3 | 0.385 | 0.0022 | 0.0025 | 1.48 | 119 | 1.5 | 160 | 0.95 |
| | 3 | 50 | 1,140 | PSt | 7 | 3 | 0.385 | 0.002 | 0.0025 | 1.46 | 125 | 0.8 | 160 | 0.93 |
| | 4 | 5 | 112 | none | 7 | 3 | 0.386 | 0.002 | 0.002 | 1.47 | × | 0.8 | 160 | × |
| | 5 | 5 | 112 | none | 7 | 3 | 0.386 | 0.002 | 0.002 | 1.47 | 117 | 1.5 | 160 | 0.95 |
| | 6 | 25 | 260 | PSt | 7 | 3 | 0.386 | 0.0023 | 0.002 | 1.47 | 121 | 0.8 | 160 | 0.97 |

As shown in Table 1 above, in all of Exampl es 1 to 6, the negative electrode density was 1 g/cm$^3$ or higher, the negative electrode layer thickness was 160 $\mu$m or 280 $\mu$m, and a favorable negative electrode layer was formed even when the volume of the negative electrode layer was large. In Example 4, it is believed that the NMR shift value was not preferable as compared to other Examples because the increased sheath layer height at the time of the calcining caused the hydrogen desorbed in the sample to remain during the calcining and corrode the carbon structure, and the ratio of lithium clusters was reduced as a result.

On the other hand, in Comparative Examples 1 and 4, the negative electrode density and the NMR shift value could not be measured since the amount of the binder was insufficient with respect to the average particle size $D_{50}$ and cracking and detachment of negative electrode layer occurred due to molding defects. Meanwhile, in Comparative Examples 2 and 5, the amount of the binder was increased for improving the molding defects; however, the negative electrode density was reduced. In Comparative Example 3, although the average particle size $D_{50}$ was 50 $\mu$m and thus comparable to those in Examples 1 to 4, the value of the basic flowability energy BFE was extremely large due to the removal of the most of fine powder, and the negative electrode density was reduced. In Comparative Example 6, it is believed that a reduction of the electrode density at the time of forming the negative electrode layer as compared to Example 5 was caused by the average particle size $D_{50}$ of smaller than 30 $\mu$m.

(Measurement of volumetric capacity (Charging and Discharging), Charge-Discharge Efficiency, and Discharge Capacity Retention Rate)

The negative electrodes prepared above in Examples 1 to 6 and Comparative Examples 1 to 6 were each used as a working electrode, while metal lithium was used as a counter electrode. As a solvent, a mixture of ethylene carbonate, dimethyl carbonate and ethyl methyl carbonate (volume ratio = 1:1:1) was used. In this solvent, 1 mol/L of LiPF$_6$ was dissolved and used as an electrolyte. As a separator, a polypropylene film was used. Coin cells were produced in a glove box under an argon atmosphere.

For each lithium secondary battery having the above-described constitution, a charge-discharge test was conducted using a charge-discharge tester ("TOSCAT" manufactured by Toyo System Co., Ltd.). Lithium doping was performed to a level of 1 mV relative to the lithium potential at a rate of 70 mA/g with respect to the mass of the active material. A constant voltage of 1 mV relative to the lithium potential was further applied for 8 hours, and the doping was terminated thereafter. The capacity at this point was defined as the charge capacity (mAh/g). Subsequently, dedoping was performed to a level of 1.5 V relative to the lithium potential at a rate of 70 mA/g with respect to the mass of the active material, and the capacity discharged at this point was defined as the discharge capacity (mAh/g) (hereinafter, also referred to as "discharge capacity $X_1$"). It is noted here that the irreversible capacity can be calculated by subtracting the discharge capacity $X_1$ (mAh/g) from the charge capacity (mAh/g). A value obtained by multiplying the electrode density (g/cm$^3$) shown in Table 1 above with the charge capacity (mAh/g) was defined as the volumetric capacity (charging) (mAh/cm$^3$), while a value obtained by multiplying the electrode density (g/cm$^3$) shown in Table 1 above with the discharge capacity $X_1$ (mAh/g) was defined as the volumetric capacity (discharging) (mAh/cm$^3$). Further, a value of percentage obtained by dividing the discharge capacity $X_1$ (mAh/g) by the charge capacity (mAh/g) was defined as the charge-discharge efficiency (initial charge-discharge efficiency) (%), and used as an index of the lithium ion utilization efficiency in the battery. The values of the volumetric capacity (charging) (mAh/cm$^3$), the volumetric capacity (discharging) (mAh/cm$^3$) and the charge-discharge efficiency (%) in Examples 1 to 6 and Comparative Examples 1 to 6 are shown together in Table 2 below.

Additionally, a rate test was conducted for each lithium secondary battery having the above-described constitution. Lithium doping was performed to a level of 1 mV relative to the lithium potential at a rate of 70 mA/g with respect to the mass of the active material. A constant voltage of 1 mV relative to the lithium potential was further applied for 8 hours, and the doping was terminated thereafter. The capacity at this point was defined as the charge capacity (mAh/g). Subsequently, dedoping was performed to a level of 1.5 V relative to the lithium potential at a rate of 1,050 mA/g with respect to the mass of the active material, and the capacity discharged at this point was defined as the discharge capacity $X_2$ (mAh/g). A value of percentage obtained by dividing the discharge capacity $X_2$ (mAh/g) by the discharge capacity $X_1$ (mAh/g) was defined as the discharge capacity retention rate (3 C/0.2 C) (%), and used as an index of the ease of lithium ion diffusion in the battery (resistance). The values of the discharge capacity retention rate (3 C/0.2 C) are also shown in Table 2 below.

[Table 2]

| | | Volumetric capacity (charging) (mAh/cm$^3$) | Volumetric capacity (discharging) (mAh/cm$^3$) | Charge-discharge efficiency (%) | Discharge capacity retention rate (3 C/0.2 C) |
|---|---|---|---|---|---|
| Example | 1 | 397 | 350 | 88.2% | 77% |
| | 2 | 399 | 348 | 87.3% | 72% |
| | 3 | 413 | 341 | 82.5% | 74% |
| | 4 | 386 | 330 | 85.3% | 72% |
| | 5 | 400 | 345 | 86.2% | 72% |
| | 6 | 391 | 341 | 87.2% | 75% |
| Comparative Example | 1 | × | × | × | × |
| | 2 | 381 | 314 | 82.3% | 68% |
| | 3 | 359 | 318 | 88.6% | 79% |
| | 4 | × | × | × | × |
| | 5 | 398 | 294 | 73.7% | 64% |
| | 6 | 387 | 321 | 83.0% | 70% |

As shown in Table 2 above, in the lithium ion secondary batteries that were produced using the respective carbonaceous materials obtained in Examples 1 to 6, a high volumetric capacity and a high discharge capacity retention rate were attained at the same time. As a result, it was revealed that electrochemical devices such as nonaqueous electrolyte secondary batteries and electric double-layer capacitors, in which a negative electrode containing the carbonaceous material of the present invention is used, exhibit a good volumetric capacity and have an excellent discharge capacity retention rate.

## Claims

1.  A carbonaceous material for an electrochemical device, having an average particle size $D_{50}$ of 30 $\mu$m or larger as measured by a laser scattering method, and a basic flowability energy BFE of 270 mJ to 1,100 mJ as measured using a powder flowability analyzer equipped with a measuring vessel of 50 mm in diameter and 160 mL in volume under the conditions of a blade tip speed of 100 mm/sec and a powder sample filling capacity of 120 mL and calculated by the following formula: BFE = T/(Rtan$\alpha$) + F (wherein, R = 48 mm, $\alpha$ = 5°, T represents a numerical value of the rotational torque measured by the analyzer, and F represents a numerical value of the normal stress measured by the analyzer).

2.  The carbonaceous material according to claim 1, wherein, when the carbonaceous material is doped with lithium to a fully-charged state and analyzed by $^7$Li solid-state NMR, a main resonance peak shifted by not less than 115 ppm toward a lower magnetic field side with respect to a resonance peak of LiCl used as a standard substance is observed.

3.  The carbonaceous material according to claim 1 or 2, wherein the average interplanar spacing $d_{002}$ of the (002) plane, which is calculated using the Bragg equation in accordance with a wide-angle X-ray diffraction method, is 0.36 nm or larger.

4.  The carbonaceous material according to any one of claims 1 to 3, which is derived from a plant.

5.  A negative electrode for an electrochemical device, comprising the carbonaceous material according to any one of claims 1 to 4.

6.  The negative electrode for an electrochemical device according to claim 5, having a negative electrode layer thickness of 100 $\mu$m or greater.

**7.** An electrochemical device, comprising the negative electrode for an electrochemical device according to claim 5 or 6.

# EP 3 905 389 A1

<table>
<tr><td colspan="3"><b>INTERNATIONAL SEARCH REPORT</b></td><td colspan="2">International application No.<br>PCT/JP2019/051006</td></tr>
</table>

**A. CLASSIFICATION OF SUBJECT MATTER**
Int. Cl. H01M4/133(2010.01)i, H01M4/587(2010.01)i, H01G11/24(2013.01)i,
H01G11/32(2013.01)i, H01G11/44(2013.01)i, C01B32/00(2017.01)i
FI: H01M4/587, H01M4/133, H01G11/24, H01G11/44, H01G11/32, C01B32/00
According to International Patent Classification (IPC) or to both national classification and IPC

**B. FIELDS SEARCHED**

Minimum documentation searched (classification system followed by classification symbols)
Int. Cl. H01M4/133, H01M4/587, H01G11/24, H01G11/32, H01G11/44, C01B32/00

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)
JSTPlus (JDreamIII);JST7580 (JDreamIII);JSTChina(JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | WO 2013/118757 A1 (KUREHA CORP.) 15 August 2013, claims 1-3, 7, 12, 15, paragraphs [0005], [0015], [0038], [0053] | 1-7 |
| Y | WO 2017/057146 A1 (KUREHA CORP.) 06 April 2017, claims 1, 4-5, paragraphs [0005], [0014], [0030], examples 1-5, 7-9, table 1 | 1-7 |
| Y | WO 2017/057145 A1 (KUREHA CORP.) 06 April 2017, claims 1, 7, 9, paragraphs [0013]-[0015], [0022], [0023] | 1-7 |
| Y | JP 2015-005377 A (SHIN-ETSU CHEMICAL CO., LTD.) 08 January 2015, paragraphs [0010], [0092]-[0101], examples 4-5, 9-10, tables 2, 3 | 1-7 |

☐ Further documents are listed in the continuation of Box C.     ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>05.02.2020 | Date of mailing of the international search report<br>18.02.2020 |
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

International application No.

PCT/JP2019/051006

| Patent Documents referred to in the Report | Publication Date | Patent Family | Publication Date |
|---|---|---|---|
| WO 2013/118757 A1 | 15.08.2013 | US 2015/0024277 A1 claims 16-18, 21-22, 25, paragraphs [0008], [0032], [0079], [0103] CN 104094458 A KR 10-2014-0121450 A KR 10-2016-0148718 A TW 201338253 A | |
| WO 2017/057146 A1 | 06.04.2017 | US 2018/0287153 A1 claims 1, 4-5, paragraphs [0008], [0017], [0033], examples 1-5, 7-9, table 1 EP 3343679 A1 KR 10-2018-0054844 A CN 108140832 A TW 201711956 A | |
| WO 2017/057145 A1 | 06.04.2017 | US 2018/0261875 A1 claims 1, 7, 9, paragraphs [0038]-[0041], [0051]-[0055] EP 3358656 A1 CN 108028378 A KR 10-2018-0044302 A TW 201712929 A | |
| JP 2015-005377 A | 08.01.2015 | US 2014/0377647 A1 paragraphs [0022], [0119]-[0129], examples 4-5, 9-10, tables 2, 3 CN 104241652 A KR 10-2014-0147708 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9161801 A
- JP H1021919 A
- JP 2012533864 W

**Non-patent literature cited in the description**

- **YUKIYOSHI HIRAMURA.** Consideration between Evaluation of Powder Rheology and Flowability. *Journal of the Society of Powder Technology Japan,* 2017, vol. 54 (9), 604-608